(19) Europäisches Patentamt
European Patent Office
Office européen des brevets

(11) EP 2 135 897 A1

(12) EUROPEAN PATENT APPLICATION
published in accordance with Art. 153(4) EPC

(43) Date of publication:
**23.12.2009 Bulletin 2009/52**

(21) Application number: **08739937.4**

(22) Date of filing: **31.03.2008**

(51) Int Cl.:
***C08L 67/04*** *(2006.01)* ***B29C 49/00*** *(2006.01)*
***B29K 67/00*** *(2006.01)* ***C08L 101/16*** *(2006.01)*

(86) International application number:
**PCT/JP2008/056831**

(87) International publication number:
**WO 2008/120825 (09.10.2008 Gazette 2008/41)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **30.03.2007 JP 2007092122**

(71) Applicants:
- **Teijin Limited**
  **Osaka-shi, Osaka 541-0054 (JP)**
- **Musashino Chemical Laboratory, Ltd.**
  **Chuo-ku**
  **Tokyo 104-0031 (JP)**

(72) Inventors:
- **TOYOHARA, Kiyotsuna**
  **Iwakuni-shi**
  **YAMAGUCHI 740-0014 (JP)**
- **NONOKAWA, Ryuji**
  **Iwakuni-shi**
  **YAMAGUCHI 740-0014 (JP)**
- **ENDO, Kohei**
  **Iwakuni-shi**
  **YAMAGUCHI 740-0014 (JP)**
- **IKEGAME, Midori**
  **Iwakuni-shi**
  **YAMAGUCHI 740-0014 (JP)**
- **TO, Shin**
  **Tokyo 104-0031 (JP)**

(74) Representative: **Hallybone, Huw George et al**
**Carpmaels & Ransford**
**43-45 Bloomsbury Square**
**London WC1A 2RA (GB)**

# (54) POLYLACTIC ACID COMPOSITION

(57) An object of the present invention is to provide a composition containing polylactic acid and having improved blow moldability and a blow molded product thereof.

The polylactic acid composition meets the following requirements (a) to (g) at the same time:
(a) the weight average molecular weight must be 70,000 to 700,000;
(b) the total content (metal content) of Sn atom, Ti atom, Al atom and Ca atom must be 3 to 20 ppm;
(c) the content of P atom must be 3 to 3,000 ppm;
(d) the (total number of gram-atoms of Sn, Ti, Al and Ca)/(number of gram-atoms of P) value must be 0.01 to 5;
(e) the content of a compound having a molecular weight of 150 or less must be not more than 0.2 wt%;
(f) the COOH terminal group concentration must be not more than 30 equivalents/ton; and
(g) the following expressions (1) and (2) must be satisfied:

$$10\ \mathrm{Pa \cdot s} < P < 100\ \mathrm{Pa \cdot s} \quad (1)$$

$$10\ \mathrm{MPa} < S \quad (2)$$

(P is a melt viscosity at 230°C and S is a stress at 150°C).

EP 2 135 897 A1

## Description

TECHNICAL FIELD

The present invention relates to a composition comprising polylactic acid. More specifically, it relates to a composition comprising polylactic acid and having improved blow moldability and a blow molded product thereof.

BACKGROUND ART

Most plastics derived from petroleum are light in weight, tough and durable, can be molded easily and arbitrarily and have been mass-produced to support our lives in many ways. However, when these plastics are thrown away into the environment, they are not easily decomposed and are accumulated. When they are burnt, they release a large amount of carbon dioxide, thereby accelerating global warming.

In view of this situation, researches into resins obtained from non-oil raw materials or biodegradable plastics which are degraded by microorganisms are now actively under way. Most of the biodegradable plastics which are now under study have an aliphatic carboxylic acid ester unit and are easily degraded by microorganisms. On the other hand, they have low heat stability, thereby causing a serious problem such as a reduction in their molecular weights or the deterioration of their colors in the step where they are exposed to a high temperature, such as melt spinning, injection molding or melt film formation.

Although polylactic acid, out of these, is a plastic which has excellent heat resistance and good balance between color and mechanical strength, as compared with petrochemical-based polyesters typified by polyethylene terephthalate and polybutylene terephthalate, it is inferior in moldability, especially blow moldability. To overcome this situation, various studies have been made, such as methods in which a specific additive is added to improve the moldability of polylactic acid (patent documents 1 and 2). However, they are still unsatisfactory.

(Patent Document 1) JP-A 2006-193540
(Patent Document 2) JP-A 2005-239932

DISCLOSURE OF THE INVENTION

It is an object of the present invention to provide a polylactic acid composition having improved blow moldability and a blow molded product thereof.

The inventors of the present invention have found that the blow moldability of a polylactic acid composition is improved by controlling the amounts of specific metal atoms contained in polylactic acid and have accomplished the present invention.

That is, the present invention is a polylactic acid composition which comprises:

(A) 30 to 70 parts by weight of polylactic acid (A) comprising not less than 90 mol% of an L-lactic acid unit and less than 10 mol% of a D-lactic acid unit and/or a comonomer unit except for lactic acid; and
(B) 70 to 30 parts by weight of polylactic acid (B) comprising not less than 90 mol% of a D-lactic acid unit and less than 10 mol% of an L-lactic acid unit and/or a comonomer unit except for lactic acid,

and which meets the following requirements (a) to (g) at the same time:

(a) the weight average molecular weight must be 70,000 to 700,000;
(b) the total content (metal content) of Sn atom, Ti atom, Al atom and Ca atom must be 3 to 20 ppm based on the total weight of the polylactic acid composition;
(c) the content of P atom must be 3 to 3,000 ppm;
(d) the (total number of gram-atoms of Sn, Ti, Al and Ca)/(number of gram-atoms of P) value must be 0.01 to 5;
(e) the content of a compound having a molecular weight of 150 or less must be not more than 0.2 wt%;
(f) the COOH terminal group concentration must be not more than 30 equivalents/ton; and
(g) the following expressions (1) and (2) must be satisfied:

$$10\ \mathrm{Pa \cdot s} < P < 100\ \mathrm{Pa \cdot s} \qquad (1)$$

$$10\ MPa < S \qquad (2)$$

(P is a melt viscosity at 230˚C and S is a stress at 150˚C).

Further, the present invention is a blow molded product which comprises:

(A) 30 to 70 parts by weight of polylactic acid (A) comprising not less than 90 mol% of an L-lactic acid unit and less than 10 mol% of a D-lactic acid unit and/or a comonomer unit except for lactic acid; and
(B) 70 to 30 parts by weight of polylactic acid (B) comprising not less than 90 mol% of a D-lactic acid unit and less than 10 mol% of an L-lactic acid unit and/or a comonomer unit except for lactic acid,

and which meets the following requirements (a) to (g) at the same time:

(a) the weight average molecular weight must be 100,000 to 500,000;
(b) the total content (metal content) of Sn atom, Ti atom, Al atom and Ca atom must be 3 to 20 ppm based on the total weight of the blow molded product;
(c) the content of P atom must be 20 to 5,000 ppm;
(d) the (total number of gram-atoms of Sn, Ti, Al and Ca)/(number of gram-atoms of P) value must be 0.1 to 5;
(e) the content of a compound having a molecular weight of 150 or less must be not more than 0.1 wt%;
(f) the COOH terminal group concentration must be not more than 30 equivalents/ton; and
(g) the following expressions (1) and (2) must be satisfied:

$$10\ Pa \cdot s < P < 100\ Pa \cdot s \qquad (1)$$

$$10\ MPa < S \qquad (2)$$

(P is a melt viscosity at 230˚C and S is a stress at 150˚C).
The present invention also includes a blow molded product in which the polylactic acid (A) and the polylactic acid (B) form a stereocomplex crystal in the blow molded product.

BRIEF DESCRIPTION OF THE DRAWINGS

Fig. 1 is a diagram showing the characteristic properties of a bottle obtained in Example 3; and
Fig. 2 is a diagram showing the characteristic properties of a bottle obtained in Example 3.

BEST MODE FOR CARRYING OUT THE INVENTION

<polylactic acid composition>

In the present invention, the polylactic acid (A) and the polylactic acid (B) contain an L-lactic acid unit or a D-lactic acid unit represented by the following formula.

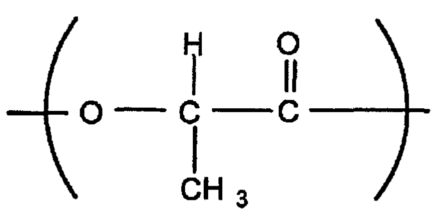

The polylactic acid (A) is a polymer which contains an L-lactic acid unit as the main component. The polylactic acid (A) contains preferably 90 to 100 mol%, more preferably 95 to 100 mol%, much more preferably 98 to 100 mol% of an L-lactic acid unit. Other units are a D-lactic acid unit and a unit except for lactic acid. The total amount of the D-lactic acid unit and the unit except for lactic acid is preferably 0 to 10 mol%, more preferably 0 to 5 mol%, much more preferably 0 to 2 mol%.

The polylactic acid (B) is a polymer which contains a D-lactic acid unit as the main component. The polylactic acid (B) contains preferably 90 to 100 mol%, more preferably 95 to 100 mol%, much more preferably 98 to 100 mol% of a D-lactic acid unit. Other units are an L-lactic acid unit and a unit except for lactic acid. The total amount of the L-lactic acid unit and the unit except for lactic acid is preferably 0 to 10 mol%, more preferably 0 to 5 mol%, much more preferably 0 to 2 mol%.

Examples of the unit except for lactic acid include units derived from dicarboxylic acids, polyhydric alcohols, hydroxycarboxylic acids and lactones having a functional group capable of forming at least two ester bonds and units derived from polyesters, polyethers and polycarbonates comprising these as constituent components.

The dicarboxylic acids include succinic acid, adipic acid, azelaic acid, sebacic acid, terephthalic acid and isophthalic acid. The polyhydric alcohols include aliphatic polyhydric alcohols such as ethylene glycol, propylene glycol, butanediol, pentanediol, hexanediol, octanediol, glycerin, sorbitan, neopentyl glycol, diethylene glycol, triethylene glycol, polyethylene glycol and polypropylene glycol, and aromatic polyhydric alcohols such as an adduct of bisphenol with ethylene oxide. The hydroxycarboxylic acids include glycolic acid and hydroxybutyric acid. The lactones include glycolide, ε-caprolactone glycolide, ε-caprolactone, β-propiolactone, δ-butyrolactone, β- or γ-butyrolactone, pivalolactone and δ-valerolactone.

In the polylactic acid composition of the present invention, the weight ratio of the above polylactic acid (A) to the above polylactic acid (B) is 30 : 70 to 70:30, preferably 45:55 to 55:45 based on the total weight of the polylactic acid (A) and the polylactic acid (B). Outside this range, heat resistance degrades.

The polylactic acid composition of the present invention meets the following requirements (a) to (g). A description is subsequently given of each of the requirements.

(requirement (a))

The weight average molecular weight of the polylactic acid composition of the present invention is 70,000 to 700,000, preferably 100,000 to 500,000, more preferably 150, 000 to 350,000. Within this range, the polylactic acid composition can be molded properly. The weight average molecular weight is a value in terms of standard polystyrene measured by gel permeation chromatography (GPC) using chloroform as an eluant. The polylactic acid composition having a weight average molecular weight within the above range is obtained by melt kneading together the polylactic acid (A) and the polylactic acid (B), both having a weight average molecular weight of 70,000 to 700,000, preferably 100,000 to 500,000, more preferably 150,000 to 350,000.

(requirement (b))

The total content (metal content) of the Sn atom, Ti atom, Al atom and Ca atom in the polylactic acid composition of the present invention is 3 to 20 ppm, preferably 1 to 15 ppm, more preferably 1 to 10 ppm based on the total weight of the polylactic acid composition. These atoms are derived from a catalyst used to produce the polylactic acid (A) and the polylactic acid (B). Outside this range, melt stability is greatly impaired disadvantageously.

The polylactic acid composition having a metal content within the above range is obtained from the polylactic acid (A) and the polylactic acid (B) produced by using these metals as a catalyst. That is, the polylactic acid (A) and the polylactic acid (B) are preferably produced by using 3 to 3,000 mg, preferably 3 to 20 mg, more preferably 3 to 15 mg of these metal atoms as a catalyst based on 1 kg of lactide.

(requirement (c))

The content of the P atom in the polylactic acid composition of the present invention is 3 to 3,000 ppm, preferably 50 to 2,000 ppm, more preferably 50 to 1,000 ppm based on the total weight of the polylactic acid composition. The P atom is derived from a catalyst deactivator or a stabilizer used to produce the polylactic acid (A) and the polylactic acid (B). Outside this range, melt stability is impaired and depolymerization proceeds disadvantageously.

The polylactic acid composition having a P atom content within the above range is obtained from the polylactic acid (A) and the polylactic acid (B) which are produced by using a compound containing a P atom as a catalyst deactivator or a stabilizer. The polylactic acid (A) and the polylactic acid (B) are preferably produced by using a catalyst deactivator or a stabilizer to ensure that the content of the P atom becomes 3 to 3,000 mg, preferably 50 to 2, 000 mg, more preferably 50 to 1,000 mg based on 1 kg of lactide.

(requirement (d))

The polylactic acid composition of the present invention has a (total number of gram-atoms of Sn, Ti, Al and Ca)/(number of gram-atoms of P) value of 0.01 to 5, preferably 0.5 to 5. The number of gram-atoms of each of Sn, Ti, Al, Ca and P means the number of moles. The polylactic acid composition which meets the above condition is obtained by adjusting the weight ratio of the catalyst and the catalyst deactivator or stabilizer at the time of producing the polylactic acid (A) and the polylactic acid (B).

(requirement (e))

The content of the compound having a molecular weight of 150 or less in the polylactic acid composition of the present invention is not more than 0.2 wt%, preferably not more than 0.04 wt%, more preferably not more than 0.02 wt% based on the polylactic acid composition. Outside this range, long-term durability greatly lowers. Examples of the compound having a molecular weight of 150 or less include lactide and lactic acid. However, the compound is not limited to these. The polylactic acid composition which meets the above condition is obtained from the polylactic acid (A) and the polylactic acid (B) from which the compound having a molecular weight of 150 or less has been removed by depressurizing the inside of the reaction system at the time of production. Depressurizing the inside of the system at the time of melt kneading together the polylactic acid (A) and the polylactic acid (B) is also effective.

(requirement (f))

The carboxyl terminal group concentration of the polylactic acid composition of the present invention is not more than 30 equivalents/ton, preferably not more than 10 equivalents/ton, more preferably not more than 8 equivalents/ton. Outside this range, hydrolysis resistance degrades. The polylactic acid composition which meets the above condition is obtained by reducing the amount of carboxylic acid contained in the raw material polylactic acid to less than 4 equivalents/ton and the amount of the residual water to less than 30 ppm.

(requirement (g))

The polylactic acid composition of the present invention satisfies the following expressions (1) and (2).

$$10\ \mathrm{Pa \cdot s} < P < 100\ \mathrm{Pa \cdot s} \qquad (1)$$

$$10\ \mathrm{MPa} < S \qquad (2)$$

(P is a melt viscosity at 230˚C and S is a stress at 150˚C.)

In the expression (1), when the melt viscosity falls within this range, the molding of a preform can be easily carried out. In the expression (2), when the tensile stress (S) is outside this range, blow molding cannot be carried out properly. The polylactic acid composition which meets the above condition is obtained by adjusting its weight average molecular weight in terms of styrene measured by gel permeation chromatography to 100, 000 or more and the melting point of the resin to a temperature higher than 200˚C.

<method of producing polylactic acid composition>

The composition of the present invention can be produced by melt kneading together the polylactic acid (A) and the polylactic acid (B).

The polylactic acid (A) and the polylactic acid (B) can be produced by heating L- or D-lactide in the presence of a metal catalyst to ring-opening polymerize it. They can also be produced by crystallizing a polylactic acid which has a low molecular weight and contains a metal catalyst and heating it in reduced pressure or in an inert gas stream to solid-phase polymerize it. Further, they can also be produced by a direct polymerization method in which lactic acid is dehydrated and condensed in the presence or absence of an organic solvent.

The polymerization reaction can be carried out in a conventionally known reactor, for example, vertical reactors equipped with a high viscosity stirring blade such as helical ribbon blade, which may be used alone or in combination. An alcohol may be used as a polymerization initiator. The alcohol preferably does not impede the polymerization of polylactic acid and is nonvolatile, as exemplified by decanol, dodecanol, tetradecanol, hexadecanol, octadecanol, ethylene glycol, triethylene glycol and benzyl alcohol.

In the solid-phase polymerization method, a relatively low-molecular weight lactic acid polyester obtained by the above ring-opening polymerization or the direct polymerization of lactic acid is used as a prepolymer. It is preferred from the viewpoint of preventing fusion that the prepolymer should be crystallized at a temperature of its glass transition temperature (Tg) or higher and lower than its melting point (Tm) in advance. The crystallized prepolymer is charged into a fixed vertical reactor or a rotary reactor such as tumbler or kiln and heated at the glass transition temperature (Tg) or higher and lower than the melting point (Tm) of the prepolymer. There will be no problem if the polymerization temperature is raised stepwise along with the proceeding of polymerization. It is also preferred that the inside of the reactor should be depressurized or the heated inert gas stream should be circulated in order to remove water generated during solid-phase polymerization efficiently.

The metal catalyst used to produce the polylactic acid (A) and the polylactic acid (B) is a compound which contains at least one metal selected from the group consisting of alkali earth metals, rare earth metals, the transition metals in the third low of the periodic table, aluminum, germanium, tin and antimony. The alkali earth metals include magnesium, calcium and strontium. The rare earth metals include scandium, yttrium, lanthanum and cerium. The transition metals in the third low of the periodic table include iron, cobalt, nickel and zinc.

The metal catalyst can be added to the composition as a carboxylate, alkoxide, aryloxide or enolate of β-diketone of at least one of these metals. When polymerization activity and color are taken into consideration, tin octylate, titanium tetraisopropoxide and aluminum triisopropoxide are particularly preferred.

The content of the metal catalyst is not less than 0.001 part by weight and less than 1 part by weight, preferably not less than 0.005 part by weight and less than 0.1 part by weight based on 100 parts by weight of the polylactic acid. When the content of the metal catalyst is too low, the polymerization rate greatly drops disadvantageously. When the content is too high, the coloring of polylactic acid by reaction heat or the coloring of a carbodiimide-based compound is promoted, and the color and heat stability of the obtained composition become worse.

<blow molded product>

A description is subsequently given of the blow molded product of the present invention.

The blow molded product of the present invention comprises 30 to 70 parts by weight of the above-described polylactic acid (A) and 70 to 30 parts by weight of the above-described polylactic acid (B) and meets the following requirements (a) to (g) at the same time. A description is subsequently given of each of the requirements.

(requirement (a))

The weight average molecular weight of the blow molded product of the present invention is 100,000 to 500,000, preferably 150, 000 to 350,000. Within this range, the blow molded product has excellent physical properties. The weight average molecular weight is a value in terms of standard polystyrene measured by gel permeation chromatography (GPC) using chloroform as an eluant. The blow molded product having a weight average molecular weight within the above range is obtained by blow molding the polylactic acid composition of the present invention having a weight average molecular weight of 70,000 to 700,000.

(requirement (b))

The total content (metal content) of the Sn atom, Ti atom, Al atom and Ca atom in the blow molded product of the present invention is 3 to 20 ppm, preferably 3 to 15 ppm, more preferably 3 to 10 ppm based on the total weight of the blow molded product. Outside this range, melt stability is impaired and depolymerization proceeds disadvantageously. The blow molded product having a metal content within the above range is obtained by blow molding the polylactic acid composition of the present invention having a total content (metal content) of the Sn atom, Ti atom, Al atom and Ca atom of 3 to 20 ppm.

(requirement (c))

The content of the P atom in the blow molded product of the present invention is 20 to 5,000 ppm, preferably 50 to 2,000 ppm, more preferably 50 to 1,000 ppm based on the total weight of the blow molded product. Outside this range, long-term durability greatly lowers. The P atom is preferably added as a phosphoric acid, phosphorous acid, hypophosphorous acid, phosphorous acid ester, phosphoric acid ester, polyphosphoric acid or metaphosphoric acid. The blow molded product having a P atom content within the above range is obtained by blow molding the polylactic acid composition of the present invention.

(requirement (d))

The (total number of gram-atoms of Sn, Ti, Al and Ca)/(number of gram-atoms of P) value of the blow molded product of the present invention is 0.1 to 5, preferably 0.1 to 4. The number of gram-atoms of each of Sn, Ti, Al and Ca means the number of moles contained in the blow molded product. The blow molded product which meets the above condition is obtained by blow molding the polylactic acid composition of the present invention.

(requirement (e))

The content of a compound having a molecular weight of 150 or less in the blow molded product of the present invention is not more than 0.1 wt%, preferably not more than 0.05 wt%, more preferably not more than 0.02 wt% based on the polylactic acid composition. Outside this range, long-term durability greatly lowers. Examples of the compound having a molecular weight of 150 or less include lactide and lactic acid. The compound is not limited to these. The blow molded product which meets the above condition is obtained by blow molding the polylactic acid composition of the present invention.

(requirement (f))

The COOH terminal group concentration of the blow molded product of the present invention is not more than 30 equivalents/ton, preferably not more than 15 equivalents/ton. Outside this range, hydrolysis resistance degrades. The blow molded product which meets the above condition is obtained by blow molding the polylactic acid composition of the present invention.

(requirement (g))

The blow molded product of the present invention satisfies the following expressions (1) and (2).

$$10\ \text{Pa}\cdot\text{s} < P < 100\ \text{Pa}\cdot\text{s} \qquad (1)$$

$$10\ \text{MPa} < S \qquad (2)$$

(P is a melt viscosity at 230˚C and S is a stress at 150˚C.)

The blow molded product which meets the above condition is obtained by blow molding the polylactic acid composition of the present invention.

In the expression (1), when the melt viscosity falls within this range, the molding of the preform can be easily carried out. In the expression (2), when the tensile stress (S) is outside this range, blow molding cannot be carried out properly.

In the present invention, preferably, the polylactic acid (A) and the polylactic acid (B) form a stereocomplex crystal in the blow molded product. The content of the stereocomplex crystal is preferably 80 to 100 %, more preferably 95 to 100 %.

The term "stereocomplex crystal" as used herein means that the proportion of melting peaks at 195˚C or higher out of the melting peaks in the temperature elevation step in the differential scanning calorimeter (DSC) measurement of a sample is preferably not less than 80 %, more preferably not less than 90 %, much more preferably not less than 95 %. The melting point is in the range of preferably 195 to 250˚C, more preferably 200 to 220˚C. The melting enthalpy is not less than 20 J/g, preferably not less than 30 J/g. Stated more specifically, it is preferred that the proportion of the melting peaks at 195˚C or higher out of the melting peaks in the temperature elevation step in the differential scanning calorimeter (DSC) measurement should be not less than 90 %, the melting point should be 195 to 250˚C, and the melting enthalpy should be not less than 20 J/g. The stereocomplex crystal can be formed by heat setting after the blow molded product is obtained.

In the present invention, to obtain the blow molded product, any known blow molding technique may be employed. For example, a stretch blow molding technique in which a preform is molded by extrusion molding and re-heated directly or after its stopper portion and bottom portion are processed may be employed.

The molding temperature in this case (specifically, the temperature of the cylinders and the nozzle of a molding machine) is 60˚C or lower, preferably 45 to 20˚C. The stretch temperature is generally 80 to 120˚C. The draw ratio is generally 1 to 4 times in the longitudinal direction and 1 to 5 times in the circumferential direction.

Although the obtained bottle may be used as it is, in the case of a liquid to be contained in the bottle which must be heat charged, such as fruit juice or oolong tea, the bottle is heat fixed in a heated blow metal mold and further provided with heat resistance before use. Heat fixing is generally carried out at a metal mold temperature of 100 to 160˚C under pneumatic tension or the like for 20 seconds to 2 minutes. Alternatively, a bottle larger than the final size is molded, its barrel portion is crystallized by thermal shrinking, and then the bottle is blow molded in a metal mold having the final shape to obtain a bottle product.

Examples

The following examples are provided for the purpose of further illustrating the present invention but are in no way to be taken as limiting. In the examples, the physical properties of the composition were measured by the following methods.

(1) measurement of weight average molecular weight (Mw)

The weight average molecular weight (Mw) was measured with the GPC-11 of Showdex Co., Ltd. by dissolving 50 mg of the composition in 5 ml of chloroform at 40˚C. The weight average molecular weight (Mc) was calculated as a value in terms of polystyrene.

(2) measurement of amounts of Sn atom, Ti atom, Al atom, Ca atom and P atom

These were obtained by IPC.

(3) measurement of numbers of gram-atoms of Sn, Ti, Al, Ca and P

These were obtained from raw materials charged into a resin.

(4) measurement of content of compound having a molecular weight of 150 or less

This was obtained by GPC.

(5) measurement of COOH terminal group concentration

This was obtained by neutralization titration.

(6) measurement of melt viscosity

This was obtained with a flow tester.

(7) measurement of tensile stress

The obtained resin composition was molded into a dumbbell-like form by an injection molding machine to obtain a molded piece. A tensile test was made on this by using a heating type Tensilon measuring instrument (of A&D Co., Ltd.) at a pulling rate of 20 mm/min at 150˚C.

Example 1

(polylactic acid (A))

100 parts by weight of L-lactide and 0.15 part by weight of stearyl alcohol were fed from the material feed port of a polymerization reactor equipped with a cooling distillation tube in a nitrogen stream. Subsequently, the inside of the reactor was substituted by nitrogen 5 times, and L-lactide was molten at 190˚C. When L-lactide was completely molten, 0.005 part by weight of tin 2-ethylhexanoate was added from the material feed port together with 500 μl of toluene to carry out polymerization at 190˚C for 1 hour.

After the end of polymerization, surplus L-lactide was volatilized, 0.25 part by weight of dihexyl phosphonoacetate was added, and strand-like polylactic acid (A) was obtained from the discharge port of the reactor and cut into a pellet while it was cooled.

(polylactic acid (B))

Then, the polylactic acid (B) was prepared by the same operation as above. That is, 100 parts by weight of D-lactide and 0.15 part by weight of stearyl alcohol were fed, the inside of the reactor was substituted by nitrogen 5 times, and D-lactide was molten at 190˚C. When D-lactide was completely molten, 0.005 part by weight of tin 2-ethylhexanoate was added from the material feed port together with 500 μl of toluene to carry out polymerization at 190˚C for 1 hour.
After the end of polymerization, surplus D-lactide was volatilized in the end, 0.1 part by weight of dihexyl phosphonoacetate was added, and strand-like polylactic acid (B) was discharged from the discharge port of the reactor and cut into a pellet while it was cooled.

(melt kneading)

50 parts by weight of the polylactic acid (A) pellet and 50 parts by weight of the polylactic acid (B) pellet obtained by the above operations were mixed together well and kneaded together at 230˚C in a nitrogen gas stream for 10 minutes by using the 50C150 Labo Plastomill kneader of Toyo Seiki Co., Ltd. The characteristic properties of the obtained composition are shown in Table 1.

Example 2

(polylactic acid (A))

100 parts by weight of L-lactide and 0.15 part by weight of stearyl alcohol were fed from the material feed port of a polymerization reactor equipped with a cooling distillation tube in a nitrogen stream. Subsequently, the inside of the reactor was substituted by nitrogen 5 times, and L-lactide was molten at 190˚C. When L-lactide was completely molten, 0.005 part by weight of tin 2-ethylhexanoate was added from the material feed port together with 500 μl of toluene to carry out polymerization at 190˚C for 1 hour.
After the end of polymerization, surplus L-lactide was volatilized, 0.1 part by weight of dihexyl phosphonoacetate was added, and strand-like polylactic acid (A) was obtained from the discharge port of the reactor and cut into a pellet while it was cooled.

(polylactic acid (B))

Then, the polylactic acid (B) was prepared by the same operation as above. That is, 100 parts by weight of D-lactide and 0.15 part by weight of stearyl alcohol were fed, the inside of the reactor was substituted by nitrogen 5 times, and D-lactide was molten at 190˚C. When D-lactide was completely molten, 0.005 part by weight of tin 2-ethylhexanoate was added from the material feed port together with 500 μl of toluene to carry out polymerization at 190˚C for 1 hour.
After the end of polymerization, surplus D-lactide was volatilized in the end, 0.01 part by weight of sodium metaphosphate was added, and strand-like polylactic acid (B) was discharged from the discharge port of the reactor and cut into a pellet while it was cooled.

(melt kneading)

50 parts by weight of the polylactic acid (A) pellet and 50 parts by weight of the polylactic acid (B) pellet obtained by the above operations were mixed together well and kneaded together at 230˚C in a nitrogen gas stream for 10 minutes by using the 50C150 Labo Plastomill kneader of Toyo Seiki Co., Ltd. The characteristic properties of the obtained composition are shown in Table 1.

Example 3

After the composition obtained in Example 1 was pelletized and dried with a drier at 120˚C for 4 hours, it was injection molded into a conical preform having an outer diameter of about 61 mm, an inner diameter of about 55 mm, a length of 5 mm and a weight of about 27 g by a bottle molding machine (12N/10T of Nissei ASB Co. , Ltd.) under the following conditions: a cylinder temperature of 240˚C, a screw revolution of 80 rpm, a metal mold temperature of 20˚C and a cycle of 16 seconds.
The obtained preform was subsequently preheated at a preform surface temperature of about 90˚C with an infrared heater and stretch blow molded by a blow molding machine in which a blow pressure was set to 1 to 1.8 MPa and a metal mold temperature of 50˚C to obtain a bottle having a barrel average thickness of 0.9 mm and an inner capacity of about 180 ml. Its oxygen permeability was 0.072 g/day/package (in the case of a polyethylene terephthalate

bottle, it is generally 0.142 g/day/package). The characteristic properties of the obtained bottle are shown in Table 2 and Figs. 1 and 2. Table 2 shows the actual measurement values of its thickness. The measurement was made 4 times.

Table 1

| | Example 1 (composition) | Example 2 (composition) | Example 3 (blow molded product) |
|---|---|---|---|
| Weight average molecular weight | 130000 | 125000 | 120000 |
| Total content of Sn atom, Ti atom, Al atom and Ca atom | 12 | 11 | 12 |
| Content of P atom | 100 | 30 | 100 |
| (total number of gram-atoms of Sn, Ti, Al and Ca)/(number of gram-atoms of P) | <0.04 | <0.13 | <0.04 |
| content of compound having a molecular weight of 150 or less (%) | 0.04 | 0.04 | 0.04 |
| COOH terminal group concentration is not more than 30 equivalents/ton | ○ | ○ | ○ |
| Melt viscosity (230˚C /1000S-1)(Pa/s) | 70 | 70 | - |
| Tensile stress | 30 | 40 | - |

Table 2

| 1 | 0˚ | 45˚ | 90˚ | 135˚ | 180˚ | 225˚ | 270˚ | 315˚ | Avg. |
|---|---|---|---|---|---|---|---|---|---|
| 40 mm | 1.17 | 1.17 | 1.13 | 1.15 | 1.15 | 1.11 | 1.26 | 1.24 | 1.17 |
| 30 mm | 0.95 | 0.93 | 0.92 | 0.90 | 0.95 | 0.92 | 0.83 | 0.85 | 0.91 |
| 17 mm | 0.60 | 0.59 | 0.60 | 0.58 | 0.60 | 0.55 | 0.52 | 0.53 | 0.57 |
| Avg. | 0.91 | 0.90 | 0.88 | 0.88 | 0.90 | 0.86 | 0.87 | 0.87 | 0.88 |
| | | | | | | | | | |
| 2 | 0˚ | 45˚ | 90˚ | 135˚ | 180 | 225˚ | 270˚ | 315˚ | Avg. |
| 40 mm | 1.19 | 1.17 | 1.21 | 1.19 | 1.15 | 1.15 | 1.14 | 1.18 | 1.17 |
| 30 mm | 0.95 | 0.94 | 0.96 | 0.95 | 0.94 | 0.92 | 0.90 | 0.90 | 0.93 |
| 17 mm | 0.65 | 0.59 | 0.58 | 0.54 | 0.56 | 0.56 | 0.59 | 0.62 | 0.59 |
| Avg. | 0.93 | 0.90 | 0.92 | 0.89 | 0.88 | 0.88 | 0.88 | 0.90 | 0.90 |
| | | | | | | | | | |
| 3 | 0˚ | 45˚ | 90˚ | 133˚ | 180˚ | 225˚ | 270˚ | 315˚ | Avg. |
| 40 mm | 1.20 | 1.18 | 1.16 | 1.14 | 1.20 | 1.17 | 1.18 | 1.27 | 1.19 |
| 30 mm | 0.91 | 0.91 | 0.90 | 0.92 | 0.96 | 0.94 | 0.89 | 0.85 | 0.91 |
| 17 mm | 0.55 | 0.56 | 0.57 | 0.61 | 0.63 | 0.62 | 0.57 | 0.54 | 0.58 |
| Avg. | 0.89 | 0.88 | 0.88 | 0.89 | 0.93 | 0.91 | 0.88 | 0.89 | 0.89 |
| | | | | | | | | | |
| 4 | 0˚ | 45˚ | 90˚ | 135˚ | 180˚ | 225˚ | 270˚ | 315˚ | Avg. |
| 40 mm | 1.18 | 1.18 | 1.16 | 1.14 | 1.10 | 1.12 | 1.14 | 1.30 | 1.17 |

(continued)

| 4 | 0° | 45° | 90° | 135° | 180° | 225° | 270° | 315° | Avg. |
|---|---|---|---|---|---|---|---|---|---|
| 30 mm | 0.93 | 0.93 | 0.92 | 0.93 | 0.92 | 0.92 | 0.94 | 0.82 | 0.91 |
| 17 mm | 0.54 | 0.56 | 0.55 | 0.58 | 0.60 | 0.60 | 0.66 | 0.50 | 0.57 |
| Avg. | 0.88 | 0.89 | 0.88 | 0.88 | 0.87 | 0.88 | 0.91 | 0.87 | 0.88 |

Effect of the Invention

According to the present invention, a polylactic acid composition having improved blow moldability can be provided.

## Claims

**1.** A polylactic acid composition which comprises:

(A) 30 to 70 parts by weight of polylactic acid (A) comprising not less than 90 mol% of an L-lactic acid unit and less than 10 mol% of a D-lactic acid unit and/or a comonomer unit except for lactic acid; and
(B) 70 to 30 parts by weight of polylactic acid (B) comprising not less than 90 mol% of a D-lactic acid unit and less than 10 mol% of an L-lactic acid unit and/or a comonomer unit except for lactic acid,

and which meets the following requirements (a) to (g) at the same time:

(a) the weight average molecular weight must be 70,000 to 700,000;
(b) the total content (metal content) of Sn atom, Ti atom, Al atom and Ca atom must be 3 to 20 ppm based on the total weight of the polylactic acid composition;
(c) the content of P atom must be 3 to 3,000 ppm;
(d) the (total number of gram-atoms of Sn, Ti, Al and Ca)/(number of gram-atoms of P) value must be 0.01 to 5;
(e) the content of a compound having a molecular weight of 150 or less must be not more than 0.2 wt%;
(f) the COOH terminal group concentration must be not more than 30 equivalents/ton; and
(g) the following expressions (1) and (2) must be satisfied:

$$10\ Pa\cdot s < P < 100\ Pa\cdot s \qquad (1)$$

$$10\ MPa < S \qquad (2)$$

(P is a melt viscosity at 230°C and S is a stress at 150°C).

**2.** A blow molded product which comprises:

(A) 30 to 70 parts by weight of polylactic acid (A) comprising not less than 90 mol% of an L-lactic acid unit and less than 10 mol% of a D-lactic acid unit and/or a comonomer unit except for lactic acid; and
(B) 70 to 30 parts by weight of polylactic acid (B) comprising not less than 90 mol% of a D-lactic acid unit and less than 10 mol% of an L-lactic acid unit and/or a comonomer unit except for lactic acid,

and which meets the following requirements (a) to (g) at the same time:

(a) the weight average molecular weight must be 100,000 to 500,000;
(b) the total content (metal content) of Sn atom, Ti atom, Al atom and Ca atom must be 3 to 20 ppm based on the total weight of the blow molded product;
(c) the content of P atom must be 20 to 5,000 ppm;
(d) the (total number of gram-atoms of Sn, Ti, Al and Ca)/(number of gram-atoms of P) value must be 0.1 to 5;
(e) the content of a compound having a molecular weight of 150 or less must be not more than 0.1 wt%;

(f) the COOH terminal group concentration must be not more than 30 equivalents/ton; and
(g) the following expressions (1) and (2) must be satisfied:

$$10\ \text{Pa·s} < P < 100\ \text{Pa·s} \qquad (1)$$

$$10\ \text{MPa} < S \qquad (2)$$

(P is a melt viscosity at 230˚C and S is a stress at 150˚C).

**3.** The blow molded product according to claim 2, wherein the polylactic acid (A) and the polylactic acid (B) form a stereocomplex crystal in the blow molded product.

Fig. 1

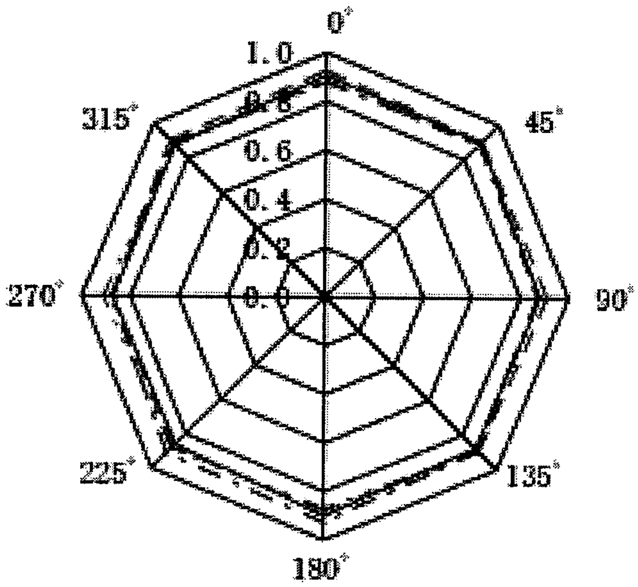


Thickness mm

Fig. 2

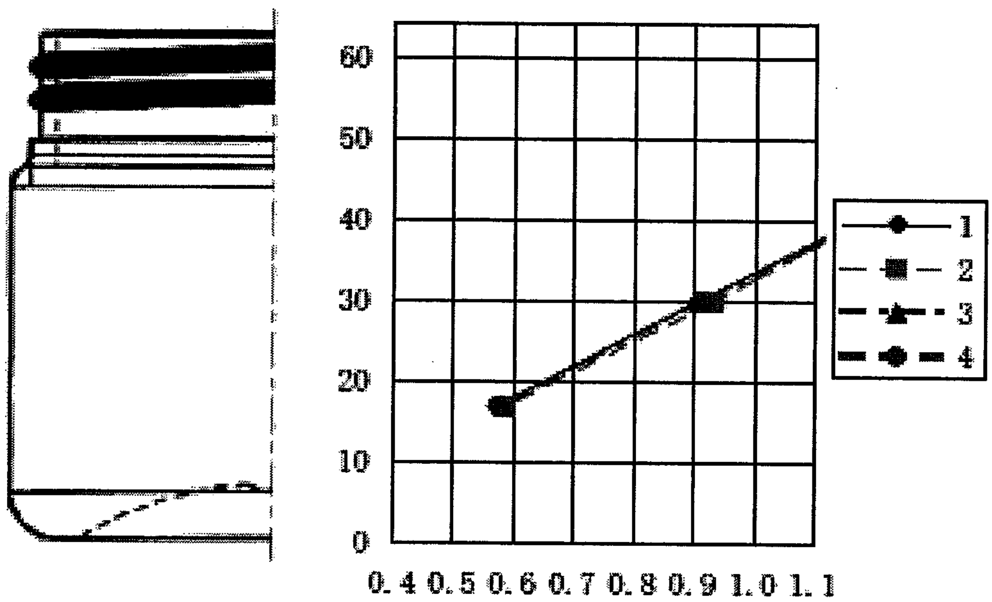


Thickness mm

## INTERNATIONAL SEARCH REPORT

International application No.
PCT/JP2008/056831

A. CLASSIFICATION OF SUBJECT MATTER
*C08L67/04*(2006.01)i, *B29C49/00*(2006.01)i, *B29K67/00*(2006.01)n, *C08L101/16*
(2006.01)n

According to International Patent Classification (IPC) or to both national classification and IPC

B. FIELDS SEARCHED

Minimum documentation searched (classification system followed by classification symbols)
C08L67/04, B29C49/00, B29K67/00, C08L101/16

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| P,X<br>P,A | WO 2008/29934 A1 (Teijin Ltd.),<br>13 March, 2008 (13.03.08),<br>Full text<br>(Family: none) | 1<br>2,3 |
| P,A | JP 2007-191552 A (Teijin Ltd.),<br>02 August, 2007 (02.08.07),<br>Full text<br>(Family: none) | 1-3 |
| P,A | WO 2007/43547 A1 (Teijin Ltd.),<br>19 April, 2007 (19.04.07),<br>Full text<br>& JP 2007-99934 A & JP 2007-99939 A<br>& JP 2007-146136 A & JP 2007-146137 A | 1-3 |

☒ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 22 May, 2008 (22.05.08) | 03 June, 2008 (03.06.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2008/056831

C (Continuation). DOCUMENTS CONSIDERED TO BE RELEVANT

| Category* | Citation of document, with indication, where appropriate, of the relevant passages | Relevant to claim No. |
|---|---|---|
| X<br>A | WO 2007/07893 A1 (Teijin Ltd.),<br>18 January, 2007 (18.01.07),<br>Claims; page 3, lines 20 to 27; page 18, lines 1 to 3; page 18, lines 9 to 13; examples<br>& JP 2007-23393 A & JP 2007-23083 A<br>& JP 2007-70378 A & JP 2007-70736 A | 1<br>2,3 |
| X | WO 2007/07892 A1 (Teijin Ltd.),<br>18 January, 2007 (18.01.07),<br>Claims; page 1, lines 20 to 24; page 4, lines 24 to 26; page 5, line 10; page 5, line 27; examples<br>& JP 2007-23081 A & JP 2007-70376 A | 1-3 |
| A | WO 2006/09285 A1 (Teijin Ltd.),<br>26 January, 2006 (26.01.06),<br>Full text<br>& CA 2575049 A1 & EP 1780234 A1<br>& CN 1989171 A & BR 2005013553 A<br>& KR 2007043796 A & IN 2007 CN00252 A<br>& US 20080039579 A1 | 1-3 |
| A | JP 9-25400 A (Mitsubishi Rayon Co., Ltd.),<br>28 January, 1997 (28.01.97),<br>Full text<br>(Family: none) | 1-3 |
| A | JP 61-36321 A (Daicel Chemical Industries, Ltd.),<br>21 February, 1986 (21.02.86),<br>Full text<br>(Family: none) | 1-3 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006193540 A
- JP 2005239932 A